# DEMANDE DE BREVET EUROPEEN

(11) **EP 4 813 874 A1**
(43) Date de publication de la demande: **30.09.2026**
(21) Numéro de dépôt: 26165183.0
(22) Date de dépôt: 16.03.2026
(51) Int. Cl.: B65G 1/04, B65G 1/137, G06Q 10/087

(54) **SYSTÈME ET MÉTHODE POUR LA RÉALISATION D'OPÉRATIONS DE PRÉLÈVEMENT ET DE PLACEMENT D'ARTICLES PAR GUIDAGE LUMINEUX**

(30) Priorité: 24.03.2025 FR 2502994
(71) Demandeur: Exotec Product France, 59170 Croix (FR)
(72) Inventeur: ESQUERRE-POURTERE, Louis, 59650 VILLENEUVE D'ASCQ (FR)
(74) Mandataire: Plasseraud IP

(57) **Abrégé**

Il est proposé un système pour la réalisation d'opérations de prélèvement et de placement d'articles comprenant au moins : un bac (20) comprenant une pluralité de compartiments (40), chaque compartiment (40) étant configuré pour contenir au moins un article; un système d'indication lumineuse (44), intégré au bac (20), le système d'indication lumineuse (44) comprenant au moins un indicateur lumineux (46), chaque indicateur lumineux (46) étant associé à un compartiment (40) du bac (20); une interface d'alimentation (48) configurée pour fournir une énergie au système d'indication lumineuse (44) lorsque le bac (20) est positionné sur l'interface d'alimentation (48); un contrôleur, couplé à l'interface d'alimentation (48), configuré pour commander l'activation des indicateurs lumineux (46) correspondant aux compartiments (40) contenant au moins un article à prélever ou destinés à recevoir au moins un article à placer.

## Description

### Domaine technique

La présente divulgation relève du domaine de la logistique et de la préparation de commandes. La présente divulgation vise plus particulièrement un système et une méthode pour la réalisation d'opérations de prélèvement et de placement d'articles par guidage lumineux.

### Technique antérieure

Dans le domaine de la logistique, la préparation de commandes comprend généralement un processus de prélèvement et de placement d'articles. Ce processus implique généralement un opérateur qui doit prélever des articles dans un stock, tels que des rayonnages, des étagères ou des bacs de stockage, et les déposer dans un contenant spécifique, comme un bac de préparation, un carton d'expédition ou une zone de tri.

Classiquement, les opérateurs se réfèrent à un écran affichant les instructions de prélèvement et de placement. Cela implique une charge cognitive pour les opérateurs, car ils doivent se projeter mentalement les informations affichées sur leur environnement physique. Ce décalage entre l'affichage numérique et la réalité peut entrainer des erreurs d'interprétation, ralentir l'exécution des tâches et augmenter la fatigue des opérateurs. Le problème est encore plus marqué lorsque les articles sont stockés dans des bacs compartimentés, chaque compartiment pouvant contenir des articles similaires mais distincts.

Il a été proposé d'assister les opérateurs à l'aide d'un système de prélèvement par guidage lumineux (« pick to light ») ou de placement par guidage lumineux (« put to light »). Ce système repose sur l'utilisation de dispositifs lumineux placés sur les emplacements de stockage afin de guider visuellement l'opérateur. Lors d'un prélèvement (« pick to light »), une lumière s'allume à l'emplacement de l'article à récupérer, et l'opérateur peut prélever l'article de l'emplacement éclairé. Inversement, lors d'un placement (« put to light »), le système éclaire l'emplacement où l'article doit être déposé.

Dans les systèmes de stockage et de récupération automatisés ASRS (« Automated storage and retrieval system »), le déplacement des articles est réalisé par des systèmes de transport automatisés. Des véhicules autonomes ou des convoyeurs sont chargés d'acheminer des bacs de stockage directement jusqu'à l'opérateur. Celui-ci pioche ensuite les articles depuis différents compartiments du bac. Dans ce cas, les systèmes «pick-to-light » et « put-to-light » peuvent comprendre des lumières disposées sur une structure entourant le bac, indiquant précisément à l'opérateur où prélever ou déposer des articles. Toutefois, cette structure impose un espace contraint autour des bacs, ce qui peut entraîner un risque de pincement pour l'opérateur lors des manipulations, notamment lorsque les bacs sont déplacés par le système de transport automatisé.

Alternativement, un projecteur situé au-dessus du bac peut afficher des indications visuelles directement sur le bac. Cependant, la clarté de la projection dépend fortement de la lumière environnante, ce qui peut rendre l'affichage difficilement lisible dans des environnements mal éclairés. De plus, lorsqu'un bac contient de nombreux compartiments, il devient difficile d'être précis, car la projection lumineuse risque de manquer de précision pour identifier clairement chaque emplacement de prélèvement ou de dépôt, rendant le système moins efficace. Ce système peut également être perturbé si l'opérateur se positionne entre le projecteur et le bac, créant ainsi une ombre qui masque les informations affichées et réduit la lisibilité des indications lumineuses.

### Résumé

La présente divulgation vient améliorer la situation.

Il est proposé un système pour la réalisation d'opérations de prélèvement et de placement d'articles comprenant au moins: un bac comprenant une pluralité de compartiments, chaque compartiment étant configuré pour contenir au moins un article; un système d'indication lumineuse, intégré au bac, le système d'indication lumineuse comprenant au moins un indicateur lumineux, chaque indicateur lumineux étant associé à un compartiment du bac; une interface d'alimentation configurée pour fournir une énergie au système d'indication lumineuse lorsque le bac est positionné sur l'interface d'alimentation; un contrôleur, couplé à l'interface d'alimentation, configuré pour commander l'activation des indicateurs lumineux correspondant aux compartiments contenant au moins un article à prélever ou destinés à recevoir au moins un article à placer.

Un tel système améliore l'efficacité et la précision des opérations de prélèvement et de placement d'articles. L'intégration des indicateurs lumineux au bac permet de guider visuellement l'opérateur vers le bon emplacement pour prélever ou déposer un article, en éliminant les erreurs d'interprétation ou les risques de pincement et en permettant un éclairage clair et constant de l'emplacement où placer ou prélever un article.

En outre, une seule interface d'alimentation peut alimenter une pluralité de bacs, simplifiant ainsi l'intégration de la solution dans les systèmes existants et réduisant les coûts. Le bac reste un élément passif du système, sans composant actif, ce qui facilite l'intégration, l'adaptation et la maintenance du système.

Optionnellement, le système peut en outre comprendre un véhicule autonome comprenant un châssis, et l'interface d'alimentation peut être intégrée au châssis du véhicule autonome. La surface supérieure du châssis peut être configurée pour transmettre l'énergie vers le système d'indication lumineuse du bac lorsque ledit bac est positionné sur la surface supérieure. La fluidité des opérations de prélèvement et de placement d'articles s'en trouve améliorée, l'opération de placement ou de prélèvement pouvant être réalisée directement depuis le véhicule autonome qui a acheminé le bac. Il n'y a pas d'opération de transfert du bac vers l'interface d'alimentation.

Optionnellement, les indicateurs lumineux peuvent être disposés sur une partie supérieure du bac, et le système d'indication lumineuse peut comprendre une portion de raccordement configurée pour relier chaque indicateur lumineux à l'interface d'alimentation. Cette disposition physique des indicateurs lumineux sur la partie supérieure du bac permet une visibilité optimale pour l'opérateur, réduisant ainsi le risque d'erreurs lors des opérations de prélèvement et de placement. On limite encore le risque d'erreurs lors des opérations. Par la portion de raccordement, les indicateurs lumineux peuvent être alimentés sans être en contact direct avec l'interface d'alimentation.

Optionnellement, chaque indicateur lumineux peut comprendre une fibre optique, et l'interface d'alimentation peut comprendre une pluralité de sources de lumière, chaque fibre optique étant configurée pour se coupler optiquement à une source de lumière de la pluralité de sources de lumière. Ainsi, les indicateurs lumineux peuvent s'éclairer par transmission de lumière depuis l'interface d'alimentation au travers des fibres optiques. Le bac peut être dépourvu de composants électroniques ou de conducteurs, et il n'y a pas de transmission de courant électrique directement dans le bac, minimisant ainsi les risques de défaillance liés à l'usure ou à la présence de poussière dans l'entrepôt.

Optionnellement, chaque indicateur lumineux peut comprendre un émetteur lumineux, et l'interface d'alimentation peut comprendre un connecteur omnidirectionnel adapté à transmettre de l'énergie électrique à chaque indicateur lumineux dans au moins deux positions distinctes du bac sur l'interface d'alimentation. Dans ce cas, les indicateurs lumineux s'éclairent par transmission d'énergie électrique depuis l'interface d'alimentation, au travers des câbles électriques. Cette solution est simple de mise en place et permet une installation à faible coût. Le connecteur omnidirectionnel améliore le contact électrique entre l'interface d'alimentation et chaque émetteur lumineux, éliminant le besoin d'un positionnement précis entre le bac et l'interface. L'alimentation électrique peut être maintenue en continue, quelle que soit l'orientation ou la rotation du bac sur l'interface d'alimentation.

Selon un autre aspect, il est proposé un procédé de prélèvement et de placement d'articles mis en oeuvre par un système comprenant un serveur et au moins un système de commande, le procédé comprenant : recevoir, par le serveur, une commande de prélèvement et/ou de placement d'articles, identifier, par le serveur, au moins un bac spécifique comprenant ou destiné à contenir les articles de la commande, placer le bac spécifique sur une interface d'alimentation pour connecter une source d'énergie avec un système d'indication lumineuse intégré au bac ; transmettre, par le serveur au système de commande, des informations relatives à des compartiments du bac spécifique dans lesquels un article doit être prélevé ou un article doit être déposé; activer, par le système de commande, au moins un indicateur lumineux parmi une pluralité d'indicateurs lumineux du système d'indication lumineuse, chaque indicateur lumineux étant associé à un compartiment du bac spécifique dans lequel un article doit être prélevé ou un article doit être déposé, indiquant à un opérateur l'emplacement des articles à prélever ou à placer.

L'efficacité et la précision des opérations de prélèvement et de placement d'articles s'en trouvent améliorées. Il est possible de guider visuellement l'opérateur vers le bon emplacement pour prélever ou déposer un article en minimisant le temps de traitement et le risque d'erreurs. En outre, les bacs eux-mêmes ne nécessitent pas de composants actifs, simplifiant encore l'intégration de la solution dans les systèmes existants et réduisant les coûts.

Optionnellement, le système de commande et l'interface d'alimentation peuvent être intégrés dans un châssis d'un véhicule autonome, et placer le bac spécifique sur l'interface d'alimentation peut comprendre : transmettre, par le serveur au système de commande, des instructions de récupérer le bac spécifique ; commander, par le système de commande, le déplacement du véhicule autonome vers le bac spécifique ; commander, par le système de commande, le chargement du bac spécifique sur le châssis du véhicule autonome de manière à placer ledit bac spécifique sur l'interface d'alimentation ; commander, par le système de commande, le déplacement du véhicule autonome vers l'opérateur. Cette configuration optimise le flux des opérations de prélèvement et de placement d'articles en éliminant toute étape additionnelle de transfert ou de déplacement du bac.

Optionnellement, activer les indicateurs lumineux peut comprendre coupler optiquement une source de lumière de l'interface d'alimentation et une fibre optique intégrée au bac spécifique. Ainsi, les indicateurs lumineux peuvent s'éclairer par transmission de lumière depuis l'interface d'alimentation au travers les fibres optiques.

Optionnellement, activer les indicateurs lumineux peut comprendre établir une connexion électrique entre une source d'énergie électrique de l'interface d'alimentation et un émetteur de lumière intégré au bac spécifique. Dans ce cas, les indicateurs s'éclairent par transmission d'énergie électrique depuis l'interface d'alimentation, au travers des câbles électriques.

Optionnellement, le procédé peut comprendre en outre : identifier, par le serveur, une orientation du bac spécifique placé sur l'interface d'alimentation. Une telle étape permet de limiter les erreurs potentielles lors de l'identification des emplacements de prélèvement ou de dépôt. En déterminant l'orientation du bac, le système peut ajuster précisément l'activation des indicateurs lumineux pour correspondre à la disposition réelle des compartiments.

### Brève description des dessins

D'autres caractéristiques, détails et avantages apparaîtront à la lecture de la description détaillée ci-après, et à l'analyse des dessins annexés, sur lesquels :
**Fig. 1**

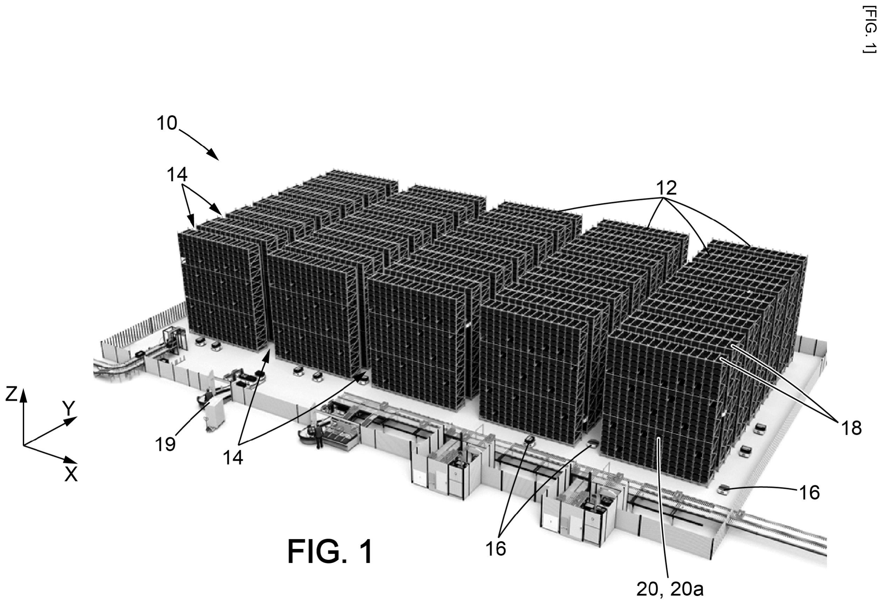

   [Fig. 1] illustre schématiquement un système de stockage et de récupération automatisé (ASRS), selon un mode de réalisation
**Fig. 2**

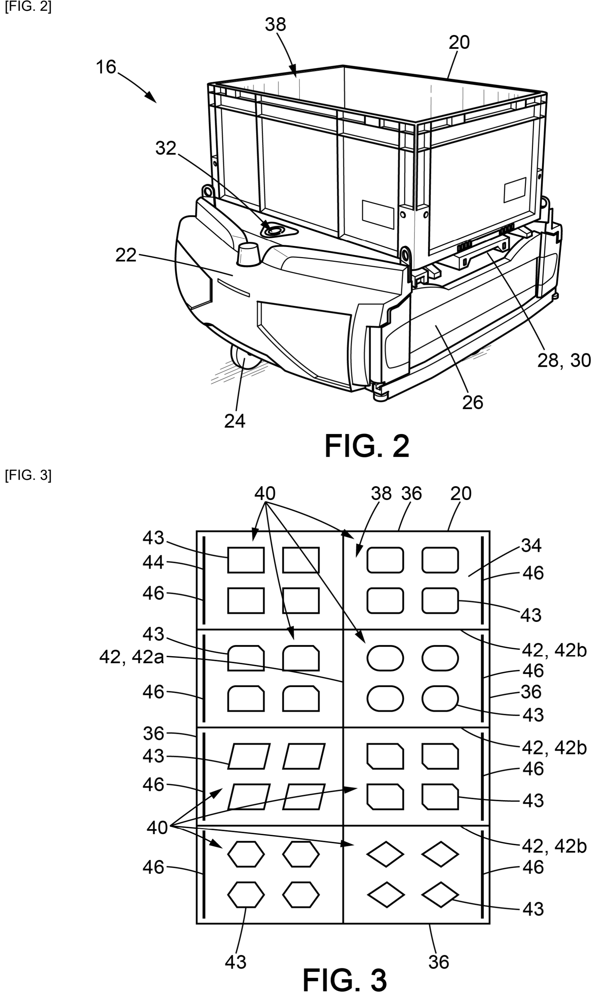

   [Fig. 2] illustre schématiquement un véhicule autonome pouvant être mis en œuvre dans l'ASRS de la figure 1.
**Fig. 3**
   [Fig. 3] illustre schématiquement une vue du dessus d'un bac contenant des articles pouvant être mis en oeuvre dans l'ASRS de la figure 1, selon un mode de réalisation.
**Fig. 4**

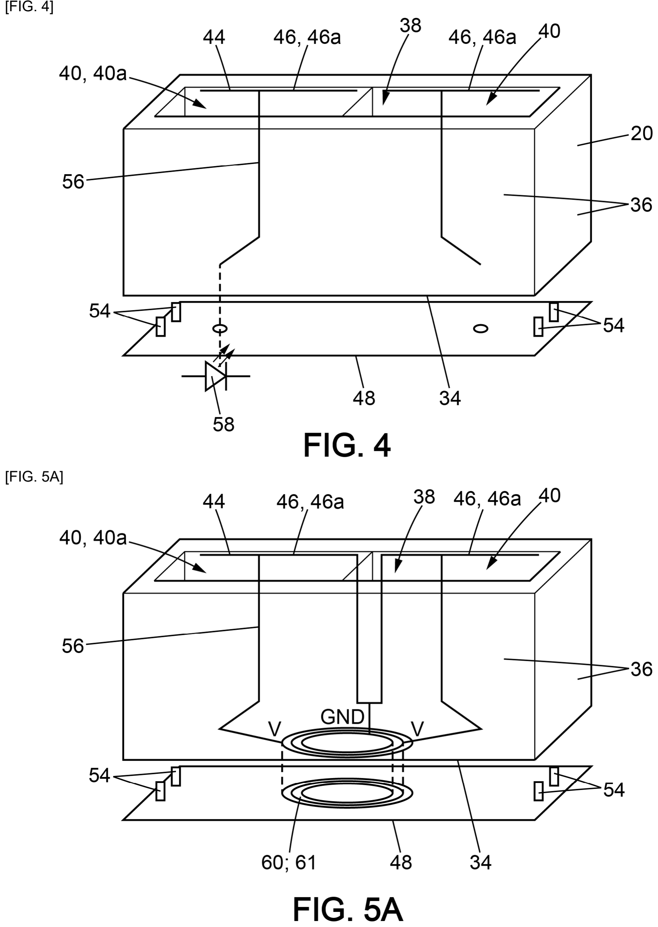

   [Fig. 4] illustre schématiquement une vue du côté d'un système pour la réalisation d'opérations de prélèvement et de placement d'articles pouvant être mis en oeuvre dans l'ASRS de la figure 1, selon un mode de réalisation.
**Fig. 5**

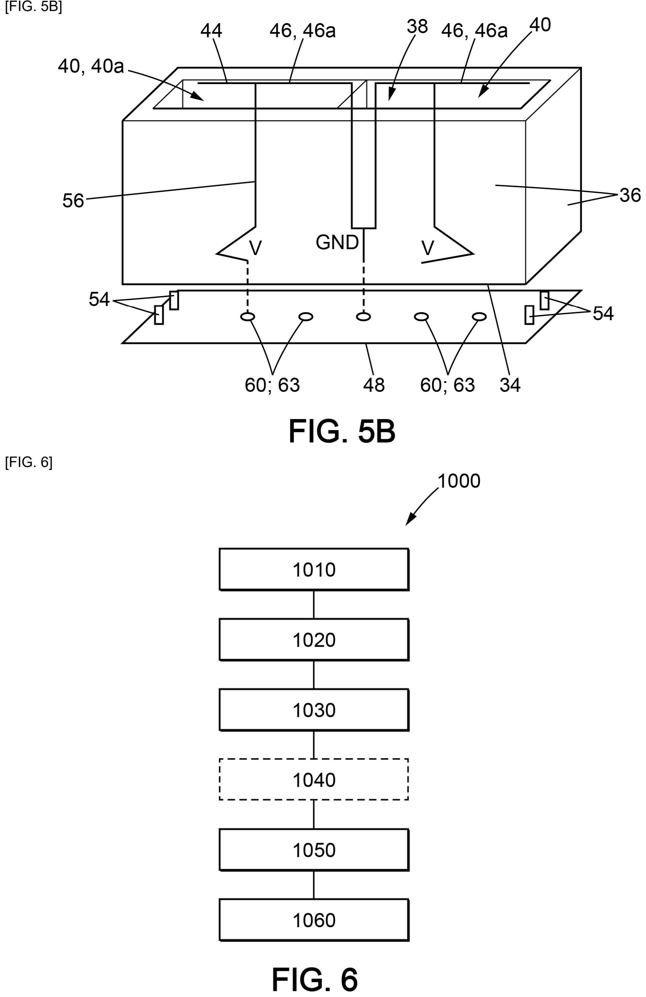

   [Fig. 5A] et [Fig. 5B] illustrent schématiquement une vue du côté de deux autres systèmes pour la réalisation d'opérations de prélèvement et de placement d'articles pouvant être mis en oeuvre dans l'ASRS de la figure 1, selon un mode de réalisation.
**Fig. 6**
   [Fig. 6] illustre un organigramme d'un procédé de prélèvement et de placement d'articles selon un mode de réalisation.
**Fig. 7**

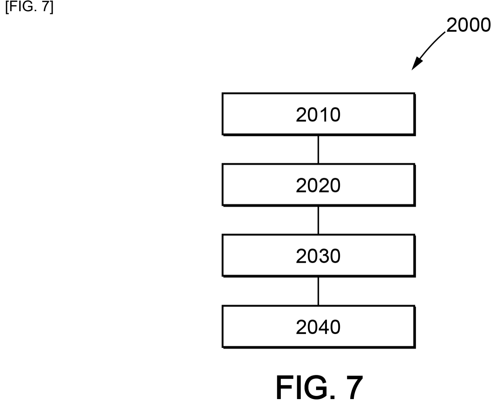

   [Fig. 7] illustre un organigramme d'un procédé de de récupération d'un bac, selon un mode de réalisation.

### Description des modes de réalisation

Un système de stockage et de récupération automatisé ASRS 10 (de l'anglais *« Automated storage and retrieval system »*) est illustré à la figure 1. Un tel système est utilisé dans les entrepôts pour le stockage d'articles.

L'ASRS 10 comprend une pluralité de racks de stockage 12 destinés à recevoir les articles pour leur stockage, les articles étant eux-mêmes stockés dans des bacs de stockage. Les racks de stockage 12 sont espacés les uns des autres selon une direction longitudinale x et une direction latérale y pour former un quadrillage d'allées 14 entre lesquelles peuvent circuler des véhicules autonomes 16. Chaque rack de stockage 12 comprend une pluralité de colonnes de stockage 18 disposées en rangées. Chaque rack de stockage 12 peut comprendre une ou deux rangées de colonnes de stockage 18. Les colonnes de stockage 18 reçoivent des bacs 20 (ou d'autres supports/contenants/palettes), les bacs 20 étant superposés les uns au-dessus des autres le long de la colonne de stockage 18 (c'est-à-dire le long d'une direction verticale z). Les bacs 20 reçoivent les articles, et leur superposition permet un stockage à haute densité des articles dans l'entrepôt.

L'ASRS 10 peut en outre comprendre un poste de préparation de commande 19 au niveau duquel un opérateur peut être positionné pour prélever les articles d'une commande. Les bacs 20 contenant un ou plusieurs articles de la commande peuvent être acheminés depuis leur emplacement de stockage dans un rack de stockage 12 jusqu'à l'opérateur.

A cet effet, l'ASRS 10 peut comprendre une pluralité de véhicules autonomes 16 ou AGV (de l'anglais « *Auto Guided Vehicles »*). La pluralité de véhicules autonomes 16 se déplace dans les allées 14 selon les directions longitudinale et latérale x,y et selon la direction verticale z afin de pouvoir accéder à tous les bacs 20 stockés dans l'ASRS 10. Les véhicules autonomes 16 peuvent réaliser des tâches de placement et de retrait de bacs 20 en se déplaçant selon les directions longitudinale, latérale et verticale x,y,z. Les véhicules autonomes 16 peuvent également transporter les bacs depuis ou vers le poste de préparation de commande 19.

La figure 2 illustre plus en détails un véhicule autonome 16.

Le véhicule autonome 16 comprend un châssis 22, typiquement de forme parallélépipédique, et des moyens de déplacements 24 motorisés montés sur le châssis 22. Les moyens de déplacements 24 permettent de réaliser les déplacements au sol du véhicule autonome 16 (notamment selon les directions latérales et longitudinales x,y). Les moyens de déplacements 24 permettent au véhicule autonome 16 de se déplacer en champs libre au sol, en particulier dans les allées de circulations 18 ou depuis/vers le poste de préparation de commandes 19.

Le véhicule autonome 16 comprend en outre un système d'ascension et de descente 26 adapté au déplacement selon une direction verticale z. Aux deux dimensions planes associées généralement au sol sur lequel se déplace le véhicule autonome 16 s'ajoute une troisième dimension verticale z associée aux racks de stockage 12 sur lesquels le véhicule autonome 16 est capable de monter et de descendre. Le système d'ascension et de descente 26 peut s'engager avec les colonnes de stockage 18 de deux racks de stockage 12 voisins et évoluer le long des colonnes de stockage 18.

Le véhicule autonome 16 comprend en outre des moyens de chargement 28. Les moyens de chargement 28 peuvent comprendre une fourche déployable 30 à partir du châssis 22 pour être déployée dans une alvéole du rack de stockage 12 afin de placer ou de récupérer un bac 20 contenu dans l'alvéole. La fourche déployable 30 est adaptée à extraire le bac 20 de l'alvéole et à le charger sur une surface supérieure 32 du châssis 22. La fourche déployable 30 est également adaptée à déposer le bac 20 dans une alvéole depuis la surface supérieure 32 du châssis 22.

La figure 3 illustre plus en détail un exemple de bac 20 destiné à contenir des articles stockés dans l'ASRS 10. Le bac 20 peut être stocké dans un rack de stockage 12, en particulier dans une alvéole du rack de stockage 12, et peut être porté sur le châssis 22 du véhicule autonome 16, en particulier sur la surface supérieure 32 du châssis 22.

Le bac 20 est ici de forme rectangulaire et comprend un fond 34 et des parois externes 36, s'étendant depuis le fond 34 afin de délimiter une cavité ouverte 38 du bac 20. La cavité ouverte 38 est divisée en une pluralité de compartiments 40. Les compartiments 40 sont délimités entre eux par des cloisons internes 42 s'étendant entre les parois externes 36 opposées du bac 20, selon la direction longitudinale et/ou latérale. Chaque compartiment 40 peut stocker un ou plusieurs articles 43 distincts.

Dans l'exemple illustré, le bac 20 comprend huit compartiments 40. Dans ce cas, les compartiments 40 sont délimités par une cloison interne longitudinale 42a et trois cloisons internes latérales 42b. Alternativement, le bac 20 pourrait comprendre entre 2 et 10 compartiments 40.

En outre, le bac 20 comprend un système d'indication lumineuse 44. Le système d'indication lumineuse 44 comprend une pluralité d'indicateurs lumineux 46. Chaque compartiment 40 du bac 20 est associé à au moins un indicateur lumineux 46 permettant d'identifier ou de signaler un compartiment 40 spécifique. Dans un exemple où le nombre d'indicateurs lumineux 46 correspond au nombre de compartiments 40, chaque compartiment 40 dispose d'un indicateur lumineux 46 dédié. Alternativement, lorsque le bac 20 comporte plus d'indicateurs lumineux 46 que de compartiments 40, plusieurs indicateurs lumineux 46 peuvent être associés à un même compartiment 40. Il y a une modularité dans l'organisation des compartiments 40 sans nécessiter de modification des indicateurs lumineux 46. Chaque indicateur lumineux 46 peut éclairer d'une unique couleur, ou avec une pluralité de couleurs différentes.

Les indicateurs lumineux 46 sont alimentés par une interface d'alimentation 48, distincte du bac 20. Les indicateurs lumineux 46 sont alimentés en énergie lorsque le bac 20 est positionné sur l'interface d'alimentation 48. L'interface d'alimentation 48 permet de transmettre l'énergie adaptée à l'éclairage de chaque indicateur lumineux 46 lorsque le bac 20 est sur l'interface d'alimentation 48. Le bac 20 peut rester un élément passif, sans source d'énergie intégrée. Cette architecture réduit les coûts d'implémentation en permettant l'utilisation d'un grand nombre de bacs 20 avec une seule interface d'alimentation 48, optimisant ainsi l'infrastructure globale. De plus, en évitant d'intégrer des composants électroniques complexes dans chaque bac 20, l'interface d'alimentation 48 facilite la maintenance et améliore la durabilité du système tout en garantissant une gestion efficace et flexible de l'éclairage des indicateurs lumineux 46.

Dans un exemple de réalisation, l'interface d'alimentation 48 est intégrée au châssis 22 du véhicule autonome 16. Le châssis embarque une source d'énergie, et la surface supérieure 32 du châssis 22 peut transférer l'énergie vers le bac 20 lorsque ledit bac 20 est posé sur ladite surface supérieure 32. La transmission d'énergie s'effectue par contact entre la surface supérieure 32 du châssis 22 et le fond 34 du bac 20. Alternativement, l'interface d'alimentation 48 peut être indépendante du véhicule autonome 16, par exemple située au poste de préparation de commandes 19. Dans ce cas, le véhicule autonome 16 peut déposer le bac 20 sur une surface plane reliée à une source d'énergie.

La surface supérieure 32 du châssis 22, ou le cas échéant la surface plane, peut en outre comprendre un ou plusieurs doigts 54 faisant saillie de la surface supérieure 32 (ou de la surface plane). Par exemple, quatre doigts 54 peuvent faire saillie de quatre coins de la surface supérieure 32 (ou de la surface plane). Chaque doigt 54 peut s'insérer au moins partiellement, voir totalement, dans une variation de relief du bac 20 pour mettre en prise le bac 20 avec l'interface d'alimentation 48. Les doigts 54 assurent un bon alignement du bac 20 sur l'interface d'alimentation 48, de sorte que l'énergie fournie par l'interface d'alimentation 48 soit transmise aux indicateurs lumineux 46. Chaque doigt 54 peut en outre être disposé sur la fourche déployable 30 pour permettre au véhicule autonome 16 de pousser et de tirer les bacs depuis ou vers les alvéoles de stockage. Chaque doigt 54 peut en outre permettre de maintenir le bac 20 en position sur la surface supérieure 32 du châssis 22 du véhicule autonome 16 lors des déplacements.

Alternativement, lorsque les doigts 54 ne font pas saillie de la surface supérieure 32 du châssis 22, il s'agit de doigts rétractables qui présentent une position encastrée dans ladite surface supérieure 32, et une position déployée dans laquelle lesdits doigts font saillie au moins partiellement de ladite surface supérieure 32. De manière similaire, en position déployée, chaque doigt peut s'insérer au moins partiellement, voir totalement, dans une variation de relief du bac 20 pour mettre en prise le bac 20 avec l'interface d'alimentation 48. Les doigts 54 assurent un bon alignement du bac 20 sur l'interface d'alimentation 48.

Tel qu'illustré, chaque indicateur lumineux 46 est placé sur une partie supérieure du bac 20, c'est-à-dire une partie distante du fond 34 du bac 20. Par exemple, les indicateurs lumineux 46 peuvent être disposés régulièrement sur les parois externes 36 du bac 20, au voisinage du bord supérieur des parois externes 36. Une portion de raccordement 56 peut relier chaque indicateur lumineux 46 à l'interface d'alimentation 48.

Le système d'indication lumineuse 44 peut être intégré au bac 20 lors de la fabrication du bac 20, notamment par moulage par injection, afin que le système d'indication lumineuse 44 soit intégré de manière fixe et solide au bac 20. Alternativement, le système d'indication lumineuse 44 peut être fixé au bac 20 après sa fabrication, de sorte que les indicateurs lumineux 46 peuvent être introduits dans des bacs 20 déjà fabriqués.

Dans un exemple de réalisation illustré à la figure 4, chaque indicateur lumineux 46 comprend une fibre optique 46a, et l'interface d'alimentation 48 comprend une pluralité de sources de lumière 58, telles que des LEDs. Lorsque le bac 20 est positionné sur l'interface d'alimentation 48, chaque source de lumière 58 est associée à une fibre optique 46a. La lumière émise par chaque source de lumière 58 traverse la fibre optique 46a associée, depuis une entrée située à proximité de la source lumineuse 58 jusqu'à une sortie positionnée pour permettre d'éclairer un compartiment 40 spécifique du bac 20. Dans certains cas, une lentille optique peut être prévue sur chaque source de lumière 58, pour faire converger la lumière vers l'entrée de la fibre optique 46 associée. La portion de raccordement 56 peut, dans cet exemple, correspondre à une portion de fibre optique 46a.

Dans un autre exemple de réalisation, illustré aux figures 5A et 5B, l'interface d'alimentation 48 comprend un collecteur omnidirectionnel 60 permettant de transmettre de l'énergie électrique vers le bac 20. Par collecteur omnidirectionnel 60, on entend un connecteur permettant d'établir une connexion électrique avec le bac 20 dans au moins deux orientations du bac 20 sur l'interface d'alimentation 48. Chaque indicateur lumineux 46 comprend un émetteur lumineux 46b, telle qu'une bande LED, et est relié au collecteur omnidirectionnel 60 par la portion de raccordement 56 sous forme de câble 56. Chaque câble 56 s'étend entre une entrée V (positif) et une sortie GND (négatif) configuré pour venir au contact de surfaces correspondantes du collecteur omnidirectionnel 60. Lorsque le bac 20 est positionné sur l'interface d'alimentation 48, l'énergie électrique est transmise via les câbles 56 à chaque émetteur lumineux 46b pour permettre d'éclairer les compartiments 40 contenant les articles à récupérer ou à déposer.

Sur la figure 5A, le collecteur omnidirectionnel 60 prend la forme d'un collecteur tournant 61. Dans ce cas, chaque câble 56 peut venir au contact d'une surface correspondante de forme annulaire, assurant ainsi la transmission continue de l'alimentation électrique vers chaque émetteur lumineux 46b, quelle que soit l'orientation ou la rotation du bac 20 sur l'interface d'alimentation 48.

Sur la figure 5B, le collecteur omnidirectionnel 60 prend la forme de connecteurs à ressorts 63 disposés symétriquement par rapport à un axe central de l'interface d'alimentation 48. Dans ce cas, chaque câble 56 est disposé pour venir au contact d'un connecteur à ressort 63 associé lorsque le bac 20 est positionné sur l'interface d'alimentation 48 dans un sens ou dans l'autre. Dans cette configuration, le bac 20 peut être disposé dans l'une des deux positions diamétralement opposées par rapport à l'axe central tout en assurant la continuité de l'alimentation électrique.

L'interface d'alimentation 48 est pilotée par un contrôleur, qui est couplé et configuré pour gérer l'éclairage des indicateurs lumineux 46, en fonction des compartiments 40 contenant des articles à récupérer ou à déposer. Le contrôleur peut allumer, éteindre ou changer la couleur de l'éclairage des indicateurs lumineux 46, selon les besoins des opérations. Le contrôleur permet de commander sélectivement l'éclairage des indicateurs lumineux 46 en fonction des besoins opérationnels, notamment pour signaler les compartiments stockant un article à récupérer ou dans lequel un article doit être placé. Le contrôleur peut être programmé pour recevoir des instructions d'un système de commande, externe, tel que celui intégré à un véhicule autonome 16 ou à un système de gestion centralisé de l'interface d'alimentation 48.

On décrit par la suite un procédé de prélèvement et de placement d'articles 1000, en référence à la figure 6. Le procédé 1000 peut être mis en œuvre par un système comprenant un système de commande et un serveur.

Le serveur peut par exemple être un système informatique central qui gère l'ensemble des opérations de stockage et de récupérations d'articles dans l'ASRS. Il peut par exemple être responsable de la coordination de véhicules autonomes 16, de la réception et de l'organisation des commandes et veiller à ce que les articles soient stockés, localisés et récupérés de manière efficace dans l'ASRS 10.

Le système de commande peut être le système commandant l'opération du véhicule autonome 16, par exemple les déplacements du véhicule autonome 16 et le retrait/placement de bacs au sein de l'ASRS 10. Le système de commande peut être intégré au véhicule autonome 16. Le système de commande peut également être intégré à une station de l'ASRS 10, par exemple au poste de préparation de commandes 19.

Le procédé 1000 comprend une première étape 1010 de réception d'une commande, par le serveur. La commande peut comprendre un ou plusieurs articles à récupérer dans un ou plusieurs bacs stockés dans l'entrepôt, auquel cas le procédé est un procédé de prélèvement par guidage lumineux « pick to light ». La commande peut aussi comprendre un ou plusieurs articles à déposer dans un ou plusieurs bacs stockés dans l'entrepôt, auquel cas le procédé est un procédé de placement par guidage lumineux « put-to-light ».

Le procédé 1000 comprend une deuxième étape 1020 d'identification, par le serveur, d'au moins un bac spécifique 20a contenant un ou plusieurs articles de la commande ou destiné à recevoir un ou plusieurs articles de la commande. Le serveur peut notamment identifier l'allée 14 et la colonne de stockage 18 dans laquelle le bac spécifique 20a est stocké, et peut identifier la position du bac spécifique 20a dans ladite colonne de stockage 18. Dans l'exemple où la commande est une commande de placement d'un ou plusieurs articles, le serveur peut identifier l'allée 14, la colonne de stockage 18 et la position dans la colonne de stockage 18 comportant le bac spécifique 20a destiné à recevoir le ou les articles à stocker.

Le procédé 1000 comprend une troisième étape 1030 de placement du bac spécifique 20a sur l'interface d'alimentation 48. Le bac spécifique 20a déposé sur l'interface d'alimentation 48 permet de connecter l'interface d'alimentation 48 avec chacun des indicateurs lumineux 46 du bac spécifique 20a. L'interface d'alimentation 48 est ainsi adaptée à transmettre une énergie, par exemple une énergie lumineuse ou électrique, vers chacun des indicateurs lumineux 46. La troisième étape 1030 peut par exemple être réalisée par acheminement du bac spécifique 20a sur l'interface d'alimentation 48 par un convoyeur, par un opérateur ou par un véhicule autonome 16.

Dans certains cas, le procédé 1000 peut comprendre une quatrième étape 1040, facultative, de détermination, par le serveur, de l'orientation du bac spécifique 20a sur l'interface d'alimentation 48. La détermination de l'orientation du bac spécifique 20a permet au serveur de confirmer la position de chaque compartiment 40 sur l'interface d'alimentation 48.

Le procédé 1000 comprend une cinquième étape 1050 de transmettre, par le serveur vers le système de commande, des informations relatives aux compartiments spécifiques 40a du bac spécifique 20a dans lesquels un article doit être prélevé ou un article doit être déposé.

Le procédé 1000 comprend une sixième étape 1060 d'activer, par le système de commande, les indicateurs lumineux 46 du système d'indication lumineuse 44 étant associés aux compartiment spécifiques 40a, indiquant ainsi à un opérateur l'emplacement des articles à prélever ou à placer. Dans certains cas, l'activation implique la connexion de sources de lumière 58 avec des fibres optiques 46a. Alternativement, l'activation implique la connexion d'un collecteur tournant 60 avec des émetteurs lumineux 46b. L'activation des indicateurs lumineux 46 peut être contrôlé par un contrôleur communiquant avec le système de commande.

Le procédé 1000 décrit ci-avant peut être mis en oeuvre pour chaque bac 20 comportant un ou plusieurs articles de la commande ou dans lequel un ou plusieurs article doit être déposé.

Lorsque la troisième étape 1030 est réalisée par le véhicule autonome 16, le système de commande et l'interface d'alimentation sont intégrés dans le châssis 22 du véhicule autonome 16, et la troisième étape 1030 de placement peut comprendre un sous procédé 2000 de récupération du bac spécifique 20a, illustré à la figure 7.

Le sous procédé 2000 comprend notamment une première étape 2010 de transmettre, par le serveur au système de commande, des instructions de récupérer le bac spécifique 20a. Le serveur peut notamment transmettre la position de stockage du bac spécifique 20a dans l'ASRS 10, de sorte que le véhicule autonome 16 puisse déterminer les déplacements à réaliser pour récupérer le bac spécifique 20a.

Le sous procédé 2000 comprend une deuxième étape 2020 de commander, par le système de commande, le déplacement du véhicule autonome 16 vers la position du bac spécifique 20a. Le véhicule autonome 16 peut se déplacer en champ libre au sol et verticalement le long des racks de stockage 12 pour accéder à la position du bac spécifique 20a. Le système de commande peut commander les moyens de déplacement 24 du véhicule autonome 16, et le système d'ascension et de descente 26 du véhicule autonome 16.

Le sous procédé 2000 comprend en outre une troisième étape 2030 de commander, par le système de commande, le chargement du bac spécifique 20a sur le châssis 22 du véhicule autonome 20a. Ici, le système de commande peut commander les moyens de chargement 28 du véhicule autonome 16 pour placer le bac spécifique 20a sur la surface supérieure 32 du châssis 22.

Le sous procédé 2000 comprend une quatrième étape 2040 de commander, par le système de commande, le déplacement du véhicule autonome 16 vers un opérateur, par exemple un opérateur positionné au niveau de la station de préparation de commandes 19. Là encore, le système de commande peut commander le système d'ascension et de descente 26 et les moyens de déplacement 24 du véhicule autonome 16. Le véhicule autonome 16 peut se positionner devant l'opérateur, de sorte que l'opérateur puisse facilement récupérer les articles contenus dans le bac spécifique 20a.

Dans d'autres exemples, le bac spécifique 20a peut être placé autrement sur l'interface d'alimentation 48, par exemple en étant acheminé par un convoyeur, ou en étant déposé par le véhicule autonome 16 ayant récupéré le bac spécifique 20a.

## Revendications

1. Système pour la réalisation d'opérations de prélèvement et de placement d'articles comprenant au moins :
- un bac (20) comprenant une pluralité de compartiments (40), chaque compartiment (40) étant configuré pour contenir au moins un article;
- un système d'indication lumineuse (44), intégré au bac (20), le système d'indication lumineuse (44) comprenant au moins un indicateur lumineux (46), chaque indicateur lumineux (46) étant associé à un compartiment (40) du bac (20);
- une interface d'alimentation (48) configurée pour fournir une énergie au système d'indication lumineuse (44) lorsque le bac (20) est positionné sur l'interface d'alimentation (48);
- un contrôleur, couplé à l'interface d'alimentation (48), configuré pour commander l'activation des indicateurs lumineux (46) correspondant aux compartiments (40) contenant au moins un article à prélever ou destinés à recevoir au moins un article à placer ; et
- un véhicule autonome (16) comprenant un châssis (22), l'interface d'alimentation (48) étant intégrée au châssis (22) du véhicule autonome (16) et une surface supérieure (32) dudit châssis (22) est configurée pour transmettre l'énergie vers le système d'indication lumineuse (44) du bac (20) lorsque ledit bac (20) est positionné sur l'interface d'alimentation (48), le véhicule autonome (16) comprenant en outre des moyens de chargement (28) pour placer le bac sur la surface supérieure (32) du châssis (22).

2. Système selon la revendication 1, dans lequel les indicateurs lumineux (46) sont disposés sur une partie supérieure du bac (20), et dans lequel le système d'indication lumineuse (44) comprend une portion de raccordement (56) configurée pour relier chaque indicateur lumineux (46) à l'interface d'alimentation (48).

3. Système selon l'une quelconque des revendications précédentes, dans lequel chaque indicateur lumineux (46) comprend une fibre optique (46a), et l'interface d'alimentation (48) comprend une pluralité sources de lumière (58), chaque fibre optique (46a) étant configurée pour se coupler optiquement à une source de lumière de la pluralité de sources de lumière (58).

4. Système selon l'une quelconque des revendications 1 ou 2, dans lequel chaque indicateur lumineux (46) comprend un émetteur lumineux (46b), et l'interface d'alimentation (48) comprend connecteur omnidirectionnel (60) adapté à transmettre de l'énergie électrique à chaque émetteur lumineux (60) dans au moins deux positions distinctes du bac (20) sur l'interface d'alimentation (48).

5. Procédé (1000) de prélèvement et de placement d'articles mis en oeuvre par un système comprenant un serveur et au moins un système de commande, le procédé comprenant :
- recevoir, par le serveur, une commande de prélèvement et/ou de placement d'articles,
- identifier, par le serveur, au moins un bac spécifique (20a) comprenant ou destiné à contenir les articles de la commande,
- placer le bac spécifique (20a) sur une interface d'alimentation (48) pour connecter une source d'énergie avec un système d'indication lumineuse (44) intégré au bac spécifique (20a);
- transmettre, par le serveur au système de commande, des informations relatives à des compartiments (40) du bac spécifique (20a) dans lesquels un article doit être prélevé ou un article doit être déposé ;
- activer, par le système de commande, au moins un indicateur lumineux parmi une pluralité d'indicateurs lumineux (46) du système d'indication lumineuse (44), chaque indicateur lumineux (46) étant associé à un compartiment (40) du bac spécifique (20a) dans lequel un article doit être prélevé ou un article doit être déposé, indiquant à un opérateur l'emplacement des articles à prélever ou à placer ;
dans lequel le système de commande et l'interface d'alimentation sont intégrés dans un châssis (22) d'un véhicule autonome (16), et placer le bac spécifique (20a) sur l'interface d'alimentation (48) comprend :
- transmettre, par le serveur au système de commande, des instructions de récupérer le bac spécifique (20a) ;
- commander, par le système de commande, le déplacement du véhicule autonome (16) vers le bac spécifique (20a);
- commander, par le système de commande, le chargement du bac spécifique (20a) sur le châssis (22) du véhicule autonome (16), par des moyens de chargement du véhicule autonome, de manière à placer ledit bac spécifique (20a) sur l'interface d'alimentation (48) ;
- commander, par le système de commande, le déplacement du véhicule autonome (16) vers l'opérateur.

6. Procédé selon la revendication 5, dans lequel activer au moins un indicateur lumineux (46) comprend coupler optiquement une source de lumière (58) de l'interface d'alimentation et une fibre optique (46a) intégrée au bac spécifique (20a).

7. Procédé selon l'une quelconque des revendication 5, dans lequel activer au moins un indicateur lumineux (46) comprend établir une connexion électrique entre une source d'énergie électrique de l'interface d'alimentation (48) et un émetteur de lumière (46b) intégrée au bac spécifique (20a).

8. Procédé selon l'une quelconque des revendications 5 à 7, comprenant en outre : identifier, par le serveur, une orientation du bac spécifique (20a) placé sur l'interface d'alimentation (48).
